# EUROPÄISCHE PATENTSCHRIFT

(11) **EP 2 879 500 B1**
(45) Veröffentlichungstag und Bekanntmachung des Hinweises auf die Patenterteilung: **15.04.2020**
(21) Anmeldenummer: 13742659.9
(22) Anmeldetag: 01.08.2013
(51) Int. Cl.: A21B 3/16, A21B 5/02, B08B 7/00

(54) **VERFAHREN UND VORRICHTUNG ZUR REINIGUNG VON BACKOBERFLÄCHEN**
METHOD AND DEVICE FOR CLEANING BAKING SURFACES
PROCÉDÉ ET DISPOSITIF DE NETTOYAGE D'UNE SURFACE D'UNE MACHINE DE CUISSON

(30) Priorität: 03.08.2012 AT 8632012
(43) Veröffentlichungstag der Anmeldung: 10.06.2015
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); JIRASCHEK, Stefan, A-2202 Königsbrunn (AT); BUCZOLITS, Peter, A-2000 Stockerau (AT); KALLER, Martin, A-2100 Leobendorf (AT); KALSS, Georg, A-1090 Wien (AT)
(74) Vertreter: Puchberger & Partner Patentanwälte
(86) Internationale Anmeldenummer: PCT/EP2013/066205
(87) Internationale Veröffentlichungsnummer: WO 2014/020117

(56) Entgegenhaltungen:
- WO-A1-94/21418
- WO-A1-99/30844
- WO-A1-2012/150199
- DE-A1- 3 717 797
- DE-C1- 19 517 218
- DE-T2- 69 715 699
- Laser Conservation & Restoration: "Continuous non-abrasive, non-contact Laser Cleaning of Baking Trays", , 25 October 2011 (2011-10-25), page 1, XP054976301, Retrieved from the Internet: URL:https://www.youtube.com/watch?v=_D1oJF xFsQE [retrieved on 2016-01-12]
- Laser Conservation & Restoration: "Laser Cleaning of Baking Trays", You Tube, 25 October 2011 (2011-10-25), page 1, XP054977941, Retrieved from the Internet: URL:https://www.youtube.com/watch?v=9HZQV8 2PzWw [retrieved on 2017-12-12]

## Beschreibung

Die Erfindung betrifft ein Verfahren zur Reinigung von Backoberflächen, insbesondere zur Reinigung der Oberflächen von Backplatten, Backformen oder Backringen, beispielsweise zur Herstellung von Flachwaffeln, Hohlwaffeln, gerollten Tüten, Weichwaffeln, Waffelröllchen, Hohlhippen etc. Ferner betrifft die Erfindung eine Backmaschine zur Herstellung oben genannter oder ähnlicher Produkte, die eine oder mehrere Backoberflächen wobei die Backmaschine eine Vorrichtung zur Reinigung der Backoberflächen umfasst.

Backmaschinen, wie beispielsweise Waffelbackmaschinen zur industriellen Herstellung von Waffeln umfassen einen Ofenabschnitt in dem öffen- und schließbare Backzangen umlaufend angetrieben geführt werden. Der zu backende Teig oder die zu backende Backmasse wird zwischen die beiden Backplatten der Backzangen eingebracht und unter Einwirkung von Temperatur und gegebenenfalls Druck gebacken. Nach dem Backvorgang werden die Backzangen geöffnet und die fertig gebackene Waffel kann entnommen werden.

In der Praxis tritt dabei das Problem auf, dass an den mit dem Teig oder der Backmasse in Berührung kommenden Backoberflächen der Backplatten Rückstände zurückbleiben. Diese Rückstände beinhalten beispielsweise Öle, Fette, stärkehaltige Ablagerungen, Zuckerablagerungen, etc. Um diese Ablagerungen von den Backoberflächen zu entfernen und diese zu reinigen, kommen derzeit unterschiedliche Verfahren zum Einsatz.

Beispielsweise werden die Backzangen in einem Reinigungsmodus der Backmaschine einzeln geöffnet und durch Bürsten ausgebürstet. Eine weitere dem Stand der Technik entsprechende Möglichkeit ist das Ausblasen der Backoberflächen mit Druckluft.

Bei der Reinigung der Backoberflächen entsteht dabei ein Zielkonflikt zwischen gründlicher Reinigung und schonender Behandlung der Backoberflächen. Beispielsweise kann es bei Ausbürsten der Backoberflächen vorkommen, dass die Oberfläche aufgeraut oder beschädigt wird. Andererseits ist es bei schonender Behandlung der Backoberfläche in vielen Fällen nicht möglich, die hartnäckigen Verkrustungen oder Verschmutzungen zu entfernen.

Herkömmliche Vorrichtungen und Verfahren sind beispielsweise aus der DE 37 17 797 A1, der Internet Veröffentlichung von Laser Conservation & Restoration mit dem Titel "Continuous non-abrasive, non-contact Laser Cleaning of Baking Trays" (gefunden am 12. Jänner 2016, https://www.youtube.com/watch?v=_D1 oJFxFsQE) und der DE 195 17 218 C1 bekannt.

Aus der oben angeführten DE 37 17 797 A1 ist eine Reinigungsvorrichtung für Backplatten bekannt, wobei die Backplatten bei der Reinigung um mehr als 90° geöffnet werden müssen.

Aus der oben angeführten DE 195 17 218 C1 sind ein Verfahren und eine Vorrichtung zum Reinigen von Vulkanisationsformen bekannt.

Aufgabe der Erfindung ist es, eine Backmaschine und ein Verfahren zur Reinigung der Backoberflächen zu schaffen, welches Verschmutzungen, Verkrustungen, Ablagerungen etc. zuverlässig entfernt und dabei keine Beschädigung der Oberfläche bewirkt. Ferner ist es Aufgabe der Erfindung, dass das Verfahren und die Vorrichtung flexibel eingesetzt werden kann, insbesondere bei bestehenden Anlagen nachgerüstet werden kann, als modulare Einrichtung im Bedarfsfall zugestellt werden kann oder als integraler Bestandteil der Backmaschine ausgeführt ist. Ferner ist es Aufgabe der Erfindung eine möglichst schnelle und unkomplizierte Reinigungsmöglichkeit zu schaffen, sodass die Produktion und der Backprozess nicht, oder nur kurz, unterbrochen werden muss. Eine weitere Aufgabe der Erfindung ist es, dass die Vorrichtung günstig in der Herstellung und das Verfahren günstig in der Durchführung ist.

Die erfindungsgemäßen Aufgaben können unter dem Begriff effiziente Reinigung von Backoberflächen subsumiert werden.

Die erfindungsgemäße Aufgabe wird durch die Merkmale der unabhängigen Patentansprüche gelöst.

Ferner kann erfindungsgemäß vorgesehen sein, dass die Schnittstelle eine mechanische Schnittstelle zur Koppelung der Laseranordnung mit der Backmaschine und/oder eine Steuerungsschnittstelle zur Koppelung der Steuerung der Backmaschine mit der Steuerung der Laseranordnung umfasst, dass eine Bewegungsvorrichtung zur Bewegung des Laserkopfes vorgesehen ist, dass der Laserkopf entlang einer ersten Linearachse, einer zweiten Linearachse und/oder um eine erste Rotationsachse bewegbar ist, wobei die Achsen in vorbestimmter Ausrichtung zu der/den Backoberflächen stehen und/oder dass die Bewegungsvorrichtung
ein erstes Trägerteil zur Bewegung des Laserkopfs entlang einer ersten Linearachse, ein zweites Trägerteil zur Bewegung des Laserkopfs entlang einer zweiten Linearachse, und/oder eine erste Rotationsachse zur Rotation oder zum Schwenken des Laserkopfs umfasst.

Die Laseranordnung ist gegebenenfalls dadurch gekennzeichnet, dass eine optische Aufnahmeeinheit und eine Datenverarbeitungseinheit zur Detektion der Verschmutzung und/oder der Reinigung der Backoberflächen vorgesehen ist.

Weiters betrifft die Erfindung eine Backmaschine, wobei eine Laseranordnung vorgesehen ist, wobei eine Schnittstelle zur Verbindung mit der Laseranordnung vorgesehen ist, wobei die Schnittstelle eine mechanische Schnittstelle zur Koppelung der Laseranordnung mit der Backmaschine und/oder eine Steuerungsschnittstelle zur

Koppelung der Steuerung der Backmaschine mit der Steuerung der Laseranordnung umfasst, wobei die Laseranordnung einen Laserkopf umfasst, von dem Laserstrahlung auf einen Bearbeitungsbereich auf der Backoberfläche leitbar ist und dass der Laserkopf und die Backoberfläche relativ zueinander zumindest einen antreibbaren Freiheitsgrad aufweisen und/oder wobei die Backoberfläche und/oder der Laserkopf durch zumindest einen Antrieb antreibbar und bewegbar sind.

Die Backmaschine zeichnet sich auch dadurch aus, dass der Laserkopf und/oder der Bearbeitungsbereich entlang der Backoberfläche bewegbar ist, wobei die Bewegungsrichtung von der Backbewegungsrichtung abweicht und bevorzugt quer zu dieser verläuft, dass die Backmaschine als Backzangenautomat ausgebildet ist, und dass die Laseranordnung in einem Bereich des Backzangenautomaten vorgesehen ist, in dem die Backzangen geöffnet sind, dass die Laseranordnung im Bereich des Vorkopfes, im Servicebereich und/oder in einem Umkehrbereich vorgesehen ist, dass die Backmaschine zumindest eine Backzange mit einer ersten und einer zweiten Backplatte umfasst, dass an der ersten Backplatte eine erste Backoberfläche und an der zweiten Backplatte eine zweite Backoberfläche vorgesehen ist und dass zur Reinigung die erste Backoberfläche zur zweiten Backoberfläche einen Öffnungswinkel von 40° bis 120°, bevorzugt größer oder gleich etwa 90° aufweist und/oder dass die Backmaschine als Ringbackmaschine ausgeführt ist.

Das Verfahren umfasst gegebenenfalls die Schritte, dass die Relativbewegung durch Bewegung der Backoberfläche und/oder durch Bewegung des Laserkopfes erzielt wird, dass der Laserkopf und/oder der Bearbeitungsbereich quer zur Backbewegungsrichtung der Backoberfläche bewegt wird, dass die Backmaschine als Backzangenautomat ausgebildet ist, dass im Bereich des Vorkopfs, im Servicebereich oder im Bereich eines Umlenkpunkts der Reinigungsbereich vorgesehen ist in dem die Backzange und die Backoberflächen um beispielweise 90° oder mehr geöffnet werden, dass im Bereich der Backoberfläche der Laserkopf positioniert wird, dass der Laserkopf entlang der Backoberfläche der ersten Backplatte geführt wird, bis die gesamte Oberfläche durch den Laserstrahl gereinigt ist, dass gegebenenfalls die zweite Backoberfläche der zweiten Backplatte mit dem Laserkopf gereinigt wird, dass die Backzange wieder geschlossen wird, dass die darauffolgende Backplatte an den Reinigungsbereich herangeführt wird und/oder dass das Verfahren wiederholt wird.

Erfindungsgemäße Verfahrensschritte können auch sein, dass die Laseranordnung mit der Backmaschine verbunden wird, dass zur Reinigung der zweiten Backplatte der Laserkopf um eine erste Rotationsachse geschwenkt wird, dass von einer optischen Aufnahmeeinheit Daten aufgenommen werden und zur Verarbeitung und/oder zur Beeinflussung des Reinigungsprozesses an eine Datenverarbeitungseinheit geleitet werden und gegebenenfalls gespeichert werden, dass die Daten zur Detektion des Verschmutzungsgrades und der Verschmutzungsstellen der Backoberflächen eingesetzt werden und/oder dass die Daten mit Zuordnung zu einer Backplatten oder eines Bereichs der Backoberfläche gespeichert und einer Steuereinrichtung zur Steuerung des Laserkopfes hinsichtlich Laserleistung zugeführt werden.

Das Verfahren umfasst gegebenenfalls die Schritte, dass die Steuerung für den Laserkopf mit der Steuerung der Backvorrichtung verbunden ist, dass die Daten zur Steuerung von Parametern wie die Fortschrittsgeschwindigkeit, die Laserintensität, die Laserleistung, die Bearbeitungsbereichsgröße, die Oszillationsfrequenz und/oder die Oszillationsamplitude verwendet werden und/oder dass die Daten zur Dokumentation von Parametern wie die Fortschrittsgeschwindigkeit, die Laserintensität, die Laserleistung, die Bearbeitungsbereichsgröße, die Oszillationsfrequenz und/oder die Oszillationsamplitude gespeichert werden.

Zur Lösung der erfindungsgemäßen Aufgaben wird eine Laseranordnung zur Reinigung der Backoberflächen eingesetzt. Als Laseranordnung kann dabei jede Form einer Laseranordnung zum Einsatz kommen, die dazu geeignet ist, die Verschmutzungen von der Backoberfläche zu entfernen. Bevorzugt kommen jedoch handelsübliche Industrielaser zum Einsatz. Diese weisen beispielsweise einen streifenförmigen oder quadratischen Strahlenquerschnitt auf. Der Laser scannt durch Oszillation einen ca. 120mm breiten Streifen der Backoberfläche. Dieser Streifen entspricht dem Bearbeitungsbereich der Laseranordnung. Je nach Breite des Streifens kann es notwendig sein, dass die Backoberfläche nicht in einem, sondern in mehreren Durchgängen gereinigt wird. Entspricht die Breite des Bearbeitungsbereichs der Laseranordnung der Breite der Backplatte, so kann die Bearbeitung auch in einem Schritt erfolgen.

In bevorzugter Weise kommen Faserlaser, CO2-Laser, YAG-Laser, gepulst oder im Dauerbetrieb zum Einsatz. Beispiele für verwendbare Laseranordnungen sind ein TEA-CO₂ Laser mit einer Wellenlänge von 10,6µm oder ein Faserlaser mit einer Wellenlänge 1,06µm.

Die Laserleistung kann dabei zwischen 20 und 500 Watt liegen. Bevorzugt liegt die Leistung bei etwa 100 bis 200 Watt. Besonders vorteilhaft haben sich in der Praxis Faserlaser mit einer Wellenlänge von 1,06µm und einer Leistung von etwa 100 Watt herausgestellt.

Die tatsächlich benötigte Laserleistung ist ferner von der Oszillationsfrequenz, der Oszillationsamplitude, der Art und des Grades der Verschmutzung abhängig.

Die Laseranordnung ist erfindungsgemäß mechanisch und steuertechnisch mit einer Backmaschine gekoppelt. Dazu weist sowohl die Backmaschine als auch die Laseranordnung eine Schnittstelle auf.

Die Steuerungsschnittstelle verbindet die Mittel zur Steuerung der Laseranordnung und die Mittel zur Steuerung der Backmaschine mit einer Steuerungseinheit. Dabei kann eine einzige Steuerungseinheit zur Steuerung der Laseranordnung und der Backmaschine geeignet und/oder eingerichtet sein oder jeweils eine Steuerungseinrichtung für die Laseranordnung und eine Steuerungseinrichtung für die Backmaschine vorgesehen sein. Beispielsweise kann zur Reinigung die Geschwindigkeit der bewegten Backflächen variiert werden. Ferner kann beispielsweise bei Backzangenautomaten der Öffnungswinkel der Backzangen zur Reinigung vergrößert oder verändert werden. Ferner ist auch die Steuerung der Laseranordnung von dem Verschmutzungsgrad und der Geschwindigkeit der Backoberfläche abhängig. So können beispielsweise durch die Verbindung über die Schnittstelle Steuerparameter wie die Laserleistung, die Oszillationsfrequenz oder die Oszillationsamplitude verändert werden.

Ferner betrifft die Schnittstelle auch die mechanische Verbindung und/oder Koppelung der Laseranordnung an der Backmaschine. Diese Schnittstelle ist beispielsweise durch herkömmliche Verbindungsmittel wie Schrauben, Bolzen, Klemmvorrichtungen, Führungsmittel etc. gegeben. Grundsätzlich ist jedes Verbindungsmittel geeignet, das zur Herstellung einer Schnittstelle dienen kann, insbesondere eines, das die gewünschte Positionierung einer Laseranordnung an der Backmaschine ermöglicht.

Die Laseranordnung und die Schnittstelle kann in einem oder mehreren Reinigungsbereichen vorgesehen sein. Als Reinigungsbereich ist jener Bereich definiert, in welchem die Backoberflächen von der Laseranordnung gereinigt werden.

Erfindungsgemäß ist ferner eine optische Detektionsanordnung vorgesehen. Diese umfasst eine Bildaufnahmeeinheit sowie eine Bildanalyseeinheit. Die optische Detektionsanordnung dient unter anderem der Feststellung des Grades der Verunreinigung und des Reinigungsfortschrittes sowie des erreichten Grades der Reinigung. Bei Bedarf können die von der Detektionsanordnung aufgenommenen Daten darüber Aufschluss geben, ob die Reinigung der Backoberfläche ausreichend erfolgt ist oder, ob ein weiterer Reinigungszyklus durchgeführt werden muss. Ferner können die Daten über den Reinigungsfortschritt und über den Reinigungsprozess gespeichert werden. Die Speicherung dieser Daten dient beispielsweise der Erstellung eines Reinigungsprotokolls, das zur Optimierung des Reinigungsprozesses beiträgt. Beispielsweise können aufgrund der aufgenommenen und gespeicherten Daten Parameter wie die Intensität des Lasers, die Fortschrittsgeschwindigkeit des Lasers, die Breite des Laserstreifens sowie die Oszillationsfrequenz angepasst werden. Ferner können die aufgenommenen Daten die Reinigungsparameter der Vorrichtung wie beispielsweise die Fortschrittsgeschwindigkeit, die Laserintensität, die Laserleistung, die Bearbeitungsbereichsgröße, die Oszillationsfrequenz, die Oszillationsamplitude etc. beinhalten und somit den genauen Ablauf des Reinigungsprozesses aufzeichnen. Die aufgezeichneten Daten werden in bevorzugter Weise mit Daten der Backmaschine verknüpft. So kann beispielsweise für jede einzelne der umlaufenden Backplatten der Reinigungsprozess nachverfolgt werden. Ferner können beispielsweise bei langgestreckten oder ringförmigen Backoberflächen gewisse Bereiche stärkerer oder schwächerer Verschmutzung identifiziert werden. Die optische Detektionsanordnung kann optische Filter wie beispielsweise Polarisationsfilter zur klaren Bilderkennung beispielsweise von stark reflektierenden, verchromten Oberflächen aufweisen. Ferner kann zur Kühlung der optischen Detektionsanordnung ein Kühlsystem vorgesehen sein. Jedoch ist in bevorzugter Weise die Vorrichtung derart ausgeführt, dass die Temperatur in der Nähe oder an der optischen Detektionsanordnung so gering ist, dass keine Kühlung notwendig ist. Eine beispielsweise Temperatur, die nicht überschritten werden sollte, ist 80°C.

Die optische Detektionsanordnung dient auch der Detektion des Verschmutzungsgrades. Der Verschmutzungsgrad kann als Parameter für die Regelung oder Steuerung des Reinigungsprozesses herangezogen werden. Besonders stark verschmutzte Bereiche können beispielsweise länger der Laserstrahlung ausgesetzt werden oder durch Veränderung der Oszillationsfrequenz und/oder der Amplitude intensiv behandelt werden.

Bei dem erfindungsgemäßen Verfahren wird durch die erfindungsgemäße Vorrichtung ein Lichtstrahl mit hoher Intensität, bevorzugt ein Laserstrahl auf die Backoberfläche geleitet. Die Backoberflächen sind in bevorzugter Weise aus einem metallischen Körper gebildet und weisen eine glatte Oberfläche oder vorbestimmte musterförmige Reliefstruktur auf. Trifft der Laserstrahl auf die Backoberfläche, so wird ein großer Teil der Strahlung reflektiert. Trifft der Laserstrahl jedoch auf eine verschmutzte Stelle oder ein Schmutzpartikel, so wird der Laserstrahl von der Verschmutzung absorbiert. Die Energie wird in Wärmeenergie umgewandelt, wodurch das Schmutzpartikel oder der verschmutzte Bereich erwärmt wird bis eine Verbrennung oder eine Verdampfung stattfindet. Durch die unterschiedlichen Absorptions- bzw. Reflexionseigenschaften der Verschmutzungen und der Backoberflächen ist eine besonders effiziente und schonende Reinigung möglich. Das Reinigungsverfahren ist somit ein im Wesentlichen thermisches Verfahren.

In weiterer Folge werden nun einige Anwendungen der erfindungsgemäßen Vorrichtung sowie des erfindungsgemäßen Verfahrens beschrieben.

Gemäß einer ersten Ausführungsform ist die Laseranordnung an einer Backmaschine mit umlaufenden, öffenbaren Backzangen vorgesehen. Die Backzangen weisen in bevorzugter Weise zwei Backoberflächen auf. Diese verlaufen jeweils an der Innenseite der Backplatten, die scharnierartig miteinander zu einer Backzange verbunden sind. Zum Backen von beispielsweise Waffeln wird der Teig in die geöffnete Backzange eingebracht. In weiterer Folge wird die Backzange geschlossen und eine bestimmte Zeit bei einer bestimmten Temperatur ausgebacken. Am Ende des Backvorgangs werden die Backzangen wieder geöffnet, um die fertig gebackene Waffel zu entnehmen. Das Öffnen und Schließen der Backzangen geschieht beispielsweise über eine Kulissensteuerung. Erfindungsgemäß ist zur Reinigung der Backoberflächen im Reinigungsbereich im Bereich des Vorkopfes, also im Bereich des Teigaufgusses, die Laseranordnung vorgesehen. Beim Durchlauf dieses Bereichs werden die Backzangen geöffnet, um im Produktionsbetrieb den Teigaufguss vorzunehmen. Die erfindungsgemäße Backmaschine weist jedoch darüber hinaus einen Reinigungsmodus auf, in dem kein Teigaufguss erfolgt. Im Reinigungsmodus wird die Laseranordnung in der Nähe der Backplatten positioniert, um den Laserstrahl auf den gewünschten Bereich der Backoberfläche leiten zu können. Dazu kann die Laseranordnung als modulares, entfernbares Modul ausgeführt sein oder fest mit dem Rahmen der Backmaschine verbunden sein. In bevorzugter Weise ist der Laserkopf der Laseranordnung schwenkbar und/oder verschiebbar angeordnet. Die Verschiebung und die Schwenkung können durch eine Steuerungseinheit gesteuert und/oder geregelt sein. Beispiele für Antriebe sind Linearantriebe, Rotationsantriebe, etc. Durch die Steuerung der Verschiebung und/oder Rotation des Laserkopfs können beliebige Bereiche der Backoberfläche durch den Laserkopf bearbeitet werden. Der Laserkopf weist einen Bearbeitungsbereich auf, in welchem der Laser oszillierend bewegt werden kann. Dieser Arbeitsbereich kann über die gesamte zu bearbeitende Backoberfläche geführt werden. Ferner kann auch eine Laseranordnung zum Einsatz kommen, deren Bearbeitungsbereich im Wesentlichen größer oder gleich der zu bearbeitenden Backoberfläche ist. In diesem Fall erfolgt die Reinigung pro Backoberfläche in einem Schritt. Ist der Bearbeitungsbereich des Laserkopfs kleiner als die zu bearbeitende Fläche, so wird die Backoberfläche in mehreren Schritten oder kontinuierlich gereinigt. Dazu wird durch Antriebe eine Relativbewegung zwischen dem Laserkopf und der Backoberfläche erzeugt. Zur Reinigung der gesamten gewünschten Backoberfläche können Bewegungskomponenten einerseits von der Bewegung der Backzangen der Backmaschine als auch von einer Bewegung des Laserkopfs durch eine Bewegungsanordnung erreicht werden.

In einer weiteren Ausführungsform ist die Laseranordnung im sogenannten Servicebereich der Backmaschine vorgesehen. Der Reinigungsbereich befindet sich im Bereich jenes Umlenkpunktes der Backzangen, der von dem Aufgussbereich weiter entfernt ist. Im Servicebereich werden die Backzangen durch eine geeignete Steuerung z.B. eine Kulissensteuerung geöffnet. Die Laseranordnung kann wiederum entweder als eigenes Modul temporär für den Reinigungsvorgang an der Backmaschine angebracht werden oder fix an dieser vorgesehen sein. Wiederum ist der Laserkopf bewegbar und steuer/regelbar angeordnet, um eine Reinigung der gesamten gewünschten Backoberfläche zu erreichen. Insbesondere ist eine Schwenkbewegung möglich, um beide Backflächen der geöffneten Backzange bearbeiten zu können. In bevorzugter Weise werden die Backzangen etwa 90° geöffnet. Somit kann auch der Laserkopf im Wesentlichen um 90° geschwenkt werden, um von der Bearbeitung der ersten Backoberfläche zur Bearbeitung der zweiten Backoberfläche zu wechseln. Diese weitere Ausführungsform ist nicht Teil der Erfindung.

Gemäß einer dritten Ausführungsform ist ebenfalls eine Backmaschine mit umlaufenden, öffenbaren Backzangen mit einer Laseranordnung versehen. Diese ist im Reinigungsbereich im Bereich des hinteren Umlenkpunktes, entfernt vom Aufgussbereich, vorgesehen. Die Backzangen werden in dieser Ausführungsform etwa 90° geöffnet um den Umlenkpunkt geführt. Der Laserkopf bearbeitet die Backoberflächen in einer im Wesentlichen vertikalen Lage. D.h., die Haupterstreckungsrichtung beider Backoberflächen einer Backzange verläuft bei der Reinigung durch die Laseranordnung im Wesentlichen vertikal. Diese dritte Ausführungsform ist nicht Teil der Erfindung.

Gemäß einer vierten Ausführungsform ist die Laseranordnung im Reinigungsbereich des vorderen Umlenkpunktes angeordnet. Ähnlich der Ausführungsform, bei der die Laseranordnung im Bereich des hinteren Umlenkpunkts angeordnet ist, ist bei der vorliegenden Ausführung der Laser bei geöffneten Backzangen auf zumindest eine der Backoberflächen gerichtet. Die Reinigung erfolgt bei im Wesentlichen vertikal stehenden Backoberflächen. Diese vierte Ausführungsform ist nicht Teil der Erfindung.

Bei allen vier oben genannten Ausführungsformen kann die Laseranordnung entweder fest mit der Backmaschine verbunden sein oder je nach Bedarf als mobile Einheit hinzugefügt werden.

Erfindungsgemäß kann auch vorgesehen sein, dass die Reinigung nicht kontinuierlich erfolgt, sondern nur während eines speziellen Reinigungsbetriebs oder eines Reinigungsmodus. Die Reinigung erfolgt in dieser Ausführungsform nur, wenn die Anlage im Reinigungsbetrieb ist, d.h. die entsprechende Backplattentemperatur zum festgelegten Reinigungsintervall gegeben ist. Die Betriebsdaten der Reinigung und Lasereinstellungsdaten während der Reinigung werden protokolliert und abgespeichert.

Die Reinigung erfolgt bevorzugt bereits zu einem Zeitpunkt, zu dem die Backplatte erst leichte Verschmutzung aufweist. Somit wird sichergestellt, dass die geringstmögliche Laserleistung für den Reinigungszyklus benötigt wird. Die Intensität der Laserbehandlung darf nicht zu einer Beeinträchtigung der Lebensdauer der Backplatten führen.

Ferner entspricht es dem Erfindungsgedanken, dass die verfahrbare und/oder modulare Laseranordnung an die Backmaschine angedockt und mit der Maschinensteuerung verbunden ist. Diese modulare Einheit kann für mehrere Maschinen verwendet werden. Die Laseranordnung hat eine integrierte Schutzeinrichtung sowie eine integrierte Absaugeinrichtung für abgesprengte Schmutzpartikel und wird mit der Maschinensteuerung gekoppelt.

Wie beschrieben, ist die Laseranordnung mit der Maschinensteuerung verbunden und/oder verbindbar. Dies ermöglicht, dass Parameter wie die Vorschubgeschwindigkeit der Backoberflächen sowie der Öffnungswinkel der Backzangen und die Steuerung des Teigaufgusses in einem Reinigungsmodus angepasst werden können. Weiters können über die gemeinsame Steuerungseinheit der Backmaschine und der Laseranordnung sicherheitsrelevante Parameter berücksichtigt werden. Derartige sicherheitsrelevante Parameter sind beispielsweise, ob die Laseranordnung ordnungsgemäß mit der Backmaschine verbunden ist, ob die Abschirmelemente zur Abschirmung der Laseranordnung und abgesprengter Schmutzpartikel richtig positioniert ist und/oder ob beispielsweise die Absaugung aktiv ist.

In einer bevorzugten Ausführungsform erfolgt die Reinigung durch die Laseranordnung in einem Reinigungsmodus, in dem kein Regelbetrieb der Backmaschine zur Produktion von Backprodukten ausgeführt wird. Der Zeitpunkt des Starts des Reinigungsmodus kann dabei von Parametern wie beispielsweise die Betriebsstunden der Backplatten, der Verschmutzungsgrad der Backoberflächen, die Backoberflächentemperatur, etc. bestimmt sein.

Ferner können durch die Verbindung der Steuerung der Laseranordnung mit der Steuerungseinrichtung der Backmaschine auch der Verschmutzungsgrad berücksichtigt werden. Bei besonders starker Verschmutzung kann die Vorschubgeschwindigkeit der Backoberflächen verlangsamt werden, um eine intensivere Reinigung vornehmen zu können. Die Bestimmung des Verschmutzungsgrades kann beispielsweise durch die optische Aufnahmeeinheit geschehen.

Ferner kann, wie angemerkt, die optische Aufnahmeeinheit, auch zur Dokumentation des Reinigungsfortschrittes, eingesetzt sein. So wird beispielsweise jede gereinigte oder jede verschmutzte Backoberfläche fotografiert oder gefilmt und das betreffende Bild zur Nachverfolgung abgespeichert. Ferner können diese Bilder auch sofort ausgewertet werden, wobei die Ergebnisse zur Lasersteuerung und zur Steuerung der Backmaschine verwendet werden können.

Zur Reinigung der Backoberflächen kann, wie angemerkt, der Laserkopf entlang mehrerer Freiheitsgrade bewegt werden. Diese Bewegung entspricht beispielsweise der Linearbewegung entlang von Linearachsen oder der Rotation um 90°, um eine beispielsweise 90° geöffnete Backzange reinigen zu können. Die Bewegung des Laserkopfs kann jedoch in ähnlicher Weise auch durch das Vorsehen von Spiegelumlenkungen ersetzt werden. Beispielsweise kann der Laserkopf fest an der Laseranordnung vorgesehen sein. Zur Umlenkung der Laserstrahlen können Spiegel eingesetzt sein. Insbesondere kann durch die Spiegelanordnung die Drehung des Laserkopfs um die Drehachse ersetzt werden. Die Linearachsen zur Bewegung des Lasers entlang einer Geraden oder entlang einer Ebene bleiben dabei bestehen.

Übliche Öffnungswinkel der Backzangen von Backmaschinen betragen etwa 40° bis 90°. Erfindungsgemäße Vorrichtungen sind dazu geeignet, Backzangen mit unterschiedlichen Öffnungswinkeln, insbesondere im Bereich zwischen 40° und 90°, zu reinigen.

In weiterer Folge wird die Erfindung anhand exemplarischer Ausführungsformen weiter erläutert.
Fig. 1 zeigt eine schematische Schrägansicht einer Laseranordnung.
Fig. 2 zeigt eine Seitenansicht einer Backzange und eine schematische Darstellung der Laseranordnung.
Fig. 3 zeigt eine schematische Seitenansicht einer möglichen Ausführungsform eines Backofens mit drei möglichen Positionen der Laseranordnung.
Fig. 4 zeigt eine Darstellung einer möglichen Backmaschine mit der erfindungsgemäßen Laseranordnung in einer Schrägansicht.
Fig. 5 zeigt eine weitere alternative Ausführungsform einer Backmaschine mit Laseranordnung. Diese Ausführungsform ist nicht Teil der Erfindung.
Fig. 6 zeigt an einer Backzange schematisch die Anordnung einer Ausführungsform des Laserkopfes.
Fig. 7 bis 9 zeigen schematisch eine Schrägansicht, einen Schnitt und eine Detailansicht einer Backmaschine mit einer Abschirmung.

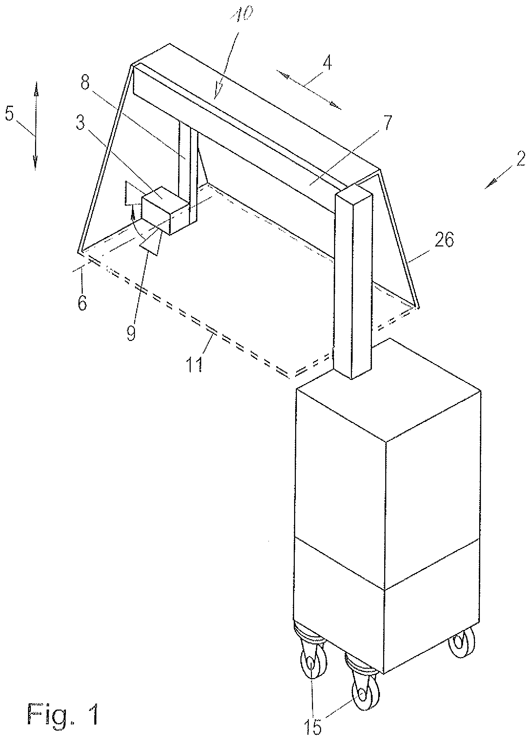

Fig. 1 zeigt eine schematische Ausführungsform einer Laseranordnung 2 mit einem Laserkopf 3, der entlang mehrerer Freiheitsgrade bewegbar angeordnet ist. In der vorliegenden Ausführungsform ist der Laserkopf 3 entlang einer ersten Linearachse 4 und entlang einer zweiten Linearachse 5 verschiebbar angeordnet. Die Darstellung der Pfeile ist symbolisch und deutet die Verschieblichkeit entlang einem ersten Trägerteil 7 und einem zweiten Trägerteil 8 an. Darüber hinaus ist der Laserkopf 3 um die erste Rotationsachse 6 schwenkbar und/oder drehbar angeordnet. Der Laserkopf weist somit drei Freiheitsgrade auf, die bevorzugt gesteuert antreibbar sind. Anzumerken ist, dass die Anordnung mit zwei linearen und einem rotatorischen Freiheitsgrad nur eine mögliche Ausführungsform ist. Je nach Anwendung können auch weniger, mehr oder andere Freiheitsgrade vonnöten sein. Zur Vereinfachung der Beschreibung werden die Elemente der Vorrichtung, die zur Bewegung des Laserkopfs 3 dienen, unter der Bezeichnung Bewegungsanordnung 10 zusammengefasst. Die Bewegung des Laserkopfs bezieht sich dabei auf eine Relativbewegung zu feststehenden Teile der Vorrichtung bzw. des Backofens oder der Backmaschine. Eine weitere Relativbewegung der zu reinigenden Backoberflächen geschieht gegebenenfalls durch Bewegung der Backoberflächen selbst.

Der Laserkopf 3 weist einen Bearbeitungsbereich 9 auf. Dieser ist im Wesentlichen durch den verwendeten Laser vorgegeben. Im vorliegenden Fall ist der Bearbeitungsbereich 9 als streifenförmiger Bereich ausgeführt. In diesem Streifen oszilliert der Laserstrahl. Ist der Bearbeitungsbereich 9 des Laserkopfs 3 und/oder der Laseranordnung kleiner als der benötigte Einsatzbereich 11 zur Reinigung der zu reinigenden Backoberfläche 1, so wird der Laserkopf einerseits über die Bewegungsanordnung 10 und/oder andererseits über die Bewegung der Backoberfläche 1 relativ zur Backoberfläche 1 bewegt. Die Bewegungsgeschwindigkeit ist dabei von mehreren Parametern abhängig. Diese Parameter sind beispielsweise der Verschmutzungsgrad der Backoberfläche, die Intensität der Laserstrahlung, die Oszillationsfrequenz, die Oszillationsamplitude sowie der Abstand des Laserkopfs von der Backoberfläche. Zur Detektion des Verschmutzungsgrades der Backoberfläche sowie zur Detektion des Reinigungsfortschritts ist an der erfindungsgemäßen Vorrichtung eine optische Aufnahmeeinheit 13 vorgesehen. Die Signale dieser optischen Aufnahmeeinheit 13, die beispielsweise als Bildaufzeichnungsgerät ausgeführt ist, können einer Datenverarbeitungseinheit 14 zugeführt werden. Diese Datenverarbeitungseinheit verarbeitet die Daten des optischen Aufnahmegerätes und verwendet diese Daten zur Steuerung des Reinigungsprozesses, insbesondere zur Steuerung des Laserkopfs. Diese Steuerung kann sowohl die Leistung und Intensität der Laserstrahlung, die Oszillationsfrequenz, die Oszillationsamplitude sowie die Bewegung des Laserkopfs relativ zur Backoberfläche betreffen. Ferner kann die Steuerung auch die Steuerung der Backmaschine selbst, insbesondere die Bewegung der Backplatten betreffen.

Erfindungsgemäß kann die Laseranordnung fest mit der Backmaschine oder den Teilen der Backmaschine verbunden sein.

In einer weiteren Ausführungsform kann die Vorrichtung mobil ausgeführt sein, um an eine bestimmte Position der Backmaschine herangeführt zu werden. Bei der Ausführung als mobile, modulare Laseranordnung ergibt sich darüber hinaus der Vorteil, dass eine Laseranordnung nacheinander an mehreren Backmaschinen vorgesehen werden kann. So kann die Laseranordnung zur Reinigung mehrerer Backmaschinen verwendet werden.

Zur weiteren Erhöhung der Flexibilität der Laseranordnung ist der Laserkopf 3 um zumindest die erste Rotationsachse 6 schwenkbar angeordnet. Durch diese Schwenkbarkeit können sowohl waagrecht verlaufende als auch schräg oder senkrecht verlaufende Backoberflächen bearbeitet werden. In der vorliegenden Ausführungsform der Fig. 1 ist die Laseranordnung bodenstehend und selbsttragend ausgeführt. Sie weist im bodennahen Bereich Räder 15 zur Verfahrbarkeit der Laseranordnung auf.

Um einen ungewollten Austritt reflektierter Laserstrahlung oder von Schmutzpartikeln zu verhindern, ist eine Abschirmung 26 vorgesehen. Diese Abschirmung ist in bevorzugter Weise für den Laser undurchdringbar. Die Abschirmung 26 ist schematisch dargestellt. Sie erstreckt sich glockenförmig über den Einsatzbereich 11 der Laseranordnung und/oder über die zu reinigende Backoberfläche.

Die Abschirmanordnung 26 ist bevorzugt glockenförmig ausgeführt und weist eine Öffnung Richtung Bearbeitungsbereich 9 auf. Zusätzlich kann eine weitere Öffnung zur Absaugung der verdampften Schmutzbestandteile vorgesehen sein. Dazu ist eine Absaugung 25 vorgesehen, welche die Dämpfe über ein Gebläse weiter abtransportiert. Die Bewegung des Laserkopfs 3 entlang der ersten Linearachse 4 und der zweiten Linearachse 5 ermöglicht eine Relativbewegung des Laserkopfs gegenüber der Backoberfläche. Die erste Linearachse 4 verläuft im Wesentlichen normal zur Backbewegungsrichtung 19 und parallel zur Haupterstreckungsrichtung der Backoberfläche der ersten Backplatte 17. Die zweite Linearachse 5 verläuft im Wesentlichen normal zur Backbewegungsrichtung 19 und parallel zur Haupterstreckungsrichtung der Backoberfläche der zweiten Backplatte 18. Die erste Rotationsachse 6 verläuft im Wesentlichen parallel zur Backbewegungsrichtung 19 und parallel zu den beiden Haupterstreckungsrichtungen der Backoberflächen der ersten und der zweiten Backplatte. Der Laserkopf kann über die Linearachsen 4, 5 und die erste Rotationsachse 6 somit zumindest quer zur I Backbewegungsrichtung 19 bewegt werden. Eine weitere Bewegungsmöglichkeit der Laseranordnung ist die Wahl des Abstandes des Laserkopfs zur jeweiligen zu bearbeitenden Backoberfläche. Somit werden bei der vorliegenden Ausführungsform über die Bewegungsanordnung 10 der Abstand zur Backoberfläche und die Positionierung quer zur Backbewegungsrichtung 19 bestimmt. Der Bearbeitungsbereich 9 ist streifenförmig ausgeführt, wobei der Streifen im Wesentlichen normal zur Backbewegungsrichtung 19 auf der jeweiligen Backoberfläche 1 verläuft. Der Bearbeitungsbereich 9 kann über die Bewegungsanordnung 10 somit im Wesentlichen entlang einer Linie bewegt werden, wobei die Linie in einer Normalebene zur Backbewegungsrichtung 19 verläuft. Um nun eine flächige Reinigung der Backoberfläche 1 zu bewirken, sind ein weiterer Freiheitsgrad und eine weitere Relativbewegungsmöglichkeit vorgesehen. In bevorzugter Weise geschieht diese durch die Bewegung der Backzangen, also der Backoberflächen 1 selbst. Die Bewegung der Backoberfläche geschieht in Backbewegungsrichtung 19.

Der Öffnungswinkel der Backzangen beträgt bevorzugt 90°. Grundsätzlich sind aber auch andere Öffnungswinkel möglich, bei denen der Kopf in einem gewissen Abstand zur Backoberfläche positioniert werden kann.

Um bei der Querbewegung zur Backoberfläche einen konstanten Abstand zu erreichen, ist es von Vorteil, wenn die Linearachsen 4, 5 jeweils parallel zu den jeweiligen Backflächen angeordnet sind. Jedoch kann eine Abstandsregelung auch über die Steuerung der Linearachsen erfolgen.

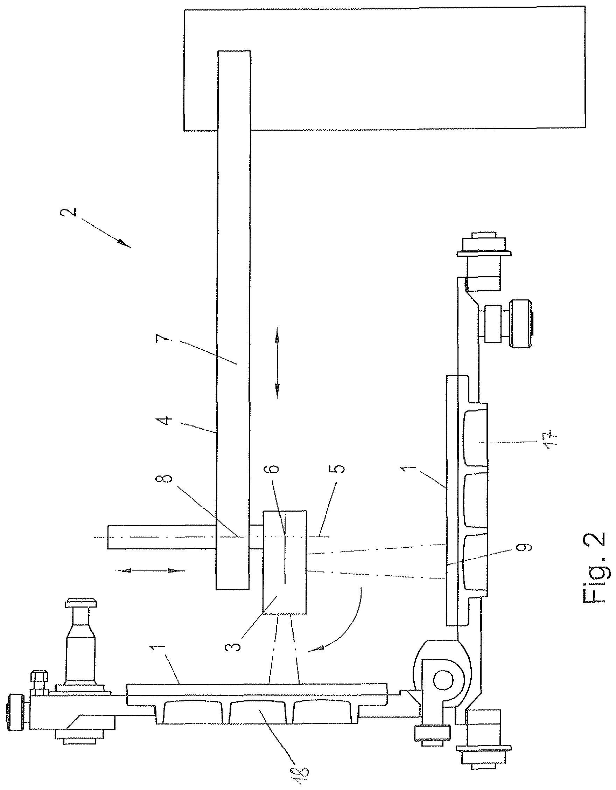

Fig. 2 zeigt eine schematische Seitenansicht einer erfindungsgemäßen Vorrichtung zur Reinigung einer oder mehrerer Backoberflächen 1. Dazu ist der Laserkopf 3 der Laseranordnung 2 entlang einer ersten Linearachse 4 des ersten Trägerteils 7 horizontal und/oder parallel zur Backoberfläche der ersten Backplatte 17 verschiebbar angeordnet. In bevorzugter Weise ist der Laserkopf 3 entlang einer zweiten Linearachse 5 des zweiten Trägerteils 8 vertikal und/oder parallel zur Backoberfläche der zweiten Backplatte 18 verschiebbar angeordnet. Darüber hinaus ist der Laserkopf 3 um die erste Rotationsachse 6 drehbar angeordnet. Diese Drehachse verläuft in der vorliegenden Darstellung projizierend. Durch Drehung des Laserkopfs 90° und/oder um einen Winkel 180° minus dem Öffnungswinkel der beiden Backoberflächen kann der Bearbeitungsbereich 9 des Laserkopfs von der Backoberfläche der ersten Backplatte 17 auf die Backoberfläche der zweiten Backplatte 18 geschwenkt werden. Die beiden Backoberflächen sind in der vorliegenden Ausführungsform als zwei Backoberflächen einer herkömmlichen Backzange zur Herstellung von Waffeln ausgeführt. Zur Reinigung der beiden Backoberflächen ist die Backzange 16 beinhaltend die beiden Backplatten 17, 18 etwa 90° geöffnet. Derartige Backplatten kommen in bevorzugter Weise in Waffelbacköfen zum Einsatz, in denen die gezeigte schematische Backzange entlang einer Backbewegungsrichtung 19 bewegt wird. Die Backbewegungsrichtung 19 verläuft in der vorliegenden Ansicht der Fig. 2 projizierend. Der Bearbeitungsbereich 9 des Laserkopfs 3 bzw. der Laseranordnung 2 ist in der vorliegenden Ausführungsform kleiner als die zu bearbeitende Backoberfläche 1. Um dennoch eine Reinigung der gesamten Backoberfläche 1 erreichen zu können, wird wie beschrieben der Laserkopf 3 durch die Bewegungsvorrichtung 10 derart bewegt, dass der Bearbeitungsbereich zumindest einmal auf jedem Punkt des zu reinigenden Einsatzbereichs 11 positioniert ist. Die Bearbeitungsdauer, Bearbeitungsgeschwindigkeit, Bearbeitungsintensität, etc. ist insbesondere von der Art der Verschmutzung und von dem Verschmutzungsgrad abhängig.

Parameter zur Steuerung des Reinigungsverfahrens werden beispielsweise durch die optische Aufnahmeeinheit 13 aufgenommen. Ferner können diese Daten auch mit Erfahrungswerten und/oder statischen Werten verknüpft werden oder durch diese bestimmt sein.

Der Laserkopf 3 ist, wie in der vorherigen Ausführungsform, parallel zur Haupterstreckungsrichtung der Backoberfläche 1 bewegbar angeordnet. Diese Bewegung geschieht über die Bewegungsanordnung 10. Durch Schwenken des Laserkopfs 3 um die erste Rotationsachse 6 ist die Bewegung des Laserkopfs sowohl zur Haupterstreckungsrichtung der Backoberfläche der ersten Backplatte 17 als auch parallel zur Backoberfläche der zweiten Backplatte 18 ermöglicht. Diese Bewegung geschieht beispielsweise in der Darstellungsebene der Fig. 2. Eine weitere Relativbewegung geschieht wiederum über die Bewegung der Backplatten entlang der Backbewegungsrichtung 19, die in diesem Fall projizierend verläuft.

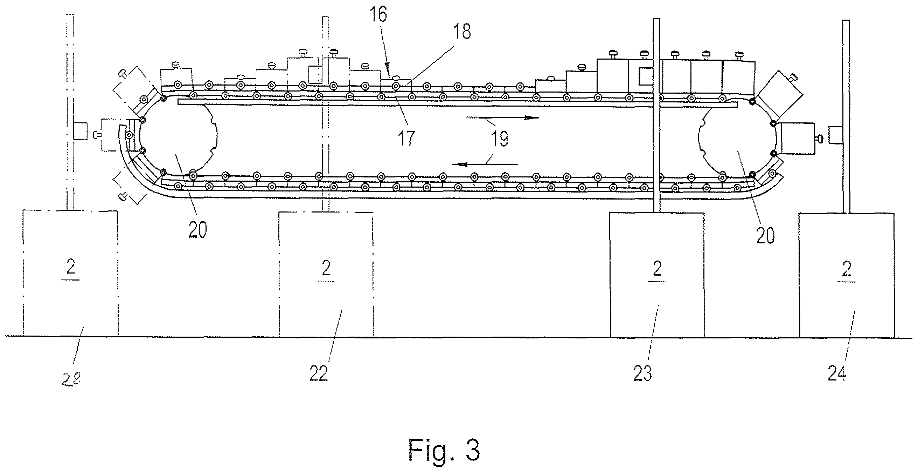

Fig. 3 zeigt eine schematische Seitenansicht einer Backmaschine, insbesondere einer Waffelbackmaschine. Dazu sind eine Vielzahl an Backzangen 16, umfassend eine erste Backplatte 17 und eine zweite Backplatte 18 entlang einer Backbewegungsrichtung 19 angeordnet. Die Backzangen 16 sind dabei kettenförmig umlaufend um zwei Umlenkrollen 20 geführt. Über eine Backplattensteuerungseinrichtung 21 können die Backplatten je nach Position oder auch unabhängig von der Position geöffnet oder geschlossen werden. Im normalen Produktionsbetrieb dient das Öffnen und Schließen der Backzangen zum Einbringen der zu backenden Backmasse oder zur Entnahme des fertig gebackenen Körpers aus der Backzange. Bevorzugt werden die zu backenden Körper bei geschlossenen Backzangen unter Einfluss von einer Backtemperatur gebacken. Zur Reinigung müssen in der vorliegenden Ausführungsform die Backzangen ebenfalls geöffnet sein. In bevorzugter Weise beträgt der Öffnungswinkel der Backzangen beispielsweise etwa 90°. Dies entspricht dem Winkel der Backoberflächen der ersten Backplatte 17 zu der Backoberfläche der zweiten Backplatte 18. Durch den 90-grädigen Öffnungswinkel kann der Laserkopf durch Verschiebung entlang zweier, 90° zueinander stehender Linearachsen 4, 5 derart bewegt werden, dass der Bearbeitungsbereich 9 der Laseranordnung 2 den gesamten Einsatzbereich 11, insbesondere die zu reinigende Backoberfläche 1 reinigen kann.

Die Backplattensteuerungseinrichtung 21 ist beispielsweise als Kulissensteuerung ausgeführt. Dazu sind Lauf- bzw. Steuerrollen der Backplatten entlang raumkurvenförmiger langgestreckter Körper geführt, um die gewünschte Öffnung der Backplatten zu erzielen.

In einer Ausführungsform der vorliegenden Erfindung ist für die Reinigung ein separater Reinigungsmodus vorgesehen. In diesem Reinigungsmodus werden an der zu reinigenden Backoberfläche 1 keine Backkörper produziert.

In der vorliegenden Darstellung der Fig. 3 ist die Laseranordnung 2 an drei möglichen beispielhaften Positionen vorgesehen. Die erste Position 22 befindet sich im Bereich des Teigaufgusses. Die zweite mögliche Position 23 für die Laseranordnung 2 befindet sich im hinteren Umlenkbereich, insbesondere im Bereich der Entnahme der gebackenen Körper. Eine dritte Position 24 befindet sich direkt an der Umlenkrolle. In diesem Bereich verlaufen die Backoberflächen 1 beider Backplatten 17, 18 im Wesentlichen vertikal. Erfindungsgemäss ist die Laseranordnung im Bereich des Teigaufgusses vorgesehen.

Ferner ist eine vierte Position 28 der Laseranordnung 2 dargestellt. Ähnlich der Position 24 ist die Laseranordnung im Bereich eines Umlenkpunktes vorgesehen. Die zu reinigenden Backoberflächen stehen bei der Reinigung im Wesentlichen vertikal.

In bevorzugter Weise geschieht die Reinigung der Backoberflächen 1 bei einer Bewegung der Backzangen in Backbewegungsrichtung 19. Andere Bewegungskomponenten und Freiheitsgrade des Laserkopfs sind durch die Bewegung entlang der ersten Linearachse 4, der zweiten Linearachse 5 sowie durch eine Rotation um die erste Rotationsachse 6 gegeben. Zusammen ergeben sich somit in der vorliegenden Ausführung durch die Bewegbarkeit der Bewegungsanordnung 10 und die Backbewegungsrichtung 19 drei lineare, antreibbare Freiheitsgrade sowie ein rotatorischer, antreibbarer Drehfreiheitsgrad. Durch diese vier Freiheitsgrade ist es möglich, die Steuerung des Laserkopfs derart auszuführen, dass durch Bewegung des Bearbeitungsbereichs 9 der gesamte gewünschte Einsatzbereich 11 und/oder die zu reinigenden Backoberflächen 1 gereinigt werden kann.

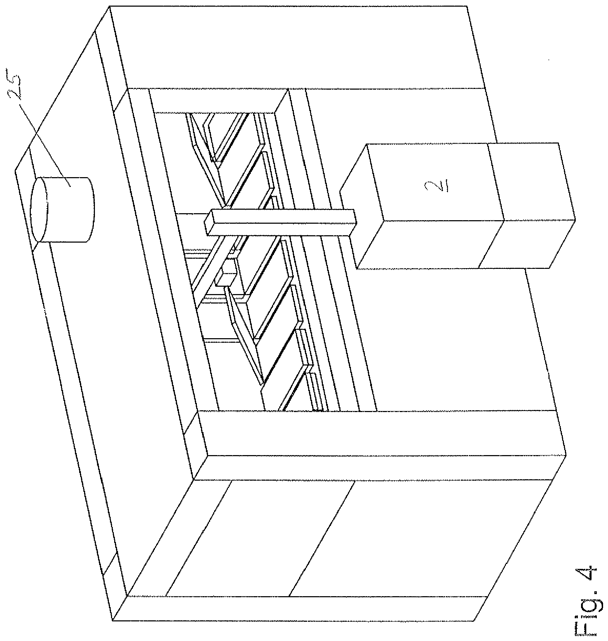

Fig. 4 zeigt eine schematische Außenansicht einer erfindungsgemäßen Vorrichtung mit einer erfindungsgemäßen Backmaschine. Die Laseranordnung befindet sich in einem Bereich, indem die Öffnung der schematisierten Backzangen 16 ausreichend groß ist, um den Laserkopf 3 zur Reinigung der Backoberflächen 1 darin zu positionieren. In bevorzugter Weise beträgt die Öffnung bis zu oder mehr als 90°. Die Reinigung geschieht im Wesentlichen durch starkes Erhitzen und Verdampfen der Verschmutzung an der Backoberfläche. Zum Abtransport der Dämpfe und Rückstände ist eine Absaugung 25 vorgesehen.

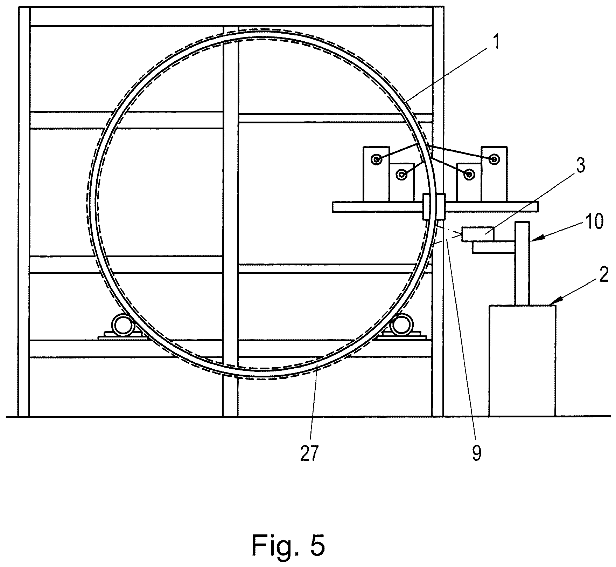

Fig. 5 zeigt eine weitere Ausführungsform einer Backmaschine, die eine Laseranordnung 2 zur Reinigung der Backoberfläche 1 aufweist. Diese Ausführungsform ist nicht Teil der Erfindung.Die Backoberfläche 1 verläuft in der vorliegenden Ausführungsform der Fig. 5 entlang eines ringförmigen, beheizten Backrings 27. Dieser Backring ist drehbar und antreibbar um seine Mittelachse, die in der vorliegenden Ansicht projizierend verläuft angeordnet. Zur Reinigung der zylinderförmigen Backoberfläche ist die Laseranordnung im Bereich des Backrings positioniert. Der Bearbeitungsbereich 9 der Laseranordnung 2 und der Laserkopf 3 sind durch Betätigung der Bewegungsanordnung 10 bewegbar. Wiederum ist eine Bewegungskomponente, nämlich die Rotation der Backoberfläche 1 um die Mittelachse des Backrings 27 durch die Bewegung der Backoberfläche 1 selbst gegeben. Eine weitere Relativbewegung wie beispielsweise eine Bewegung des Laserkopfs 3 und des Bearbeitungsbereichs 9 entlang einer, zur Mittelachse des Backrings 27 parallelen Richtung kann durch eine erste Linearachse 4 gegeben sein.

In bevorzugter Weise verläuft der Bearbeitungsbereich 9 streifenförmig auf der Backoberfläche 1. Gemäß der vorliegenden Ausführungsform verläuft der Streifen im Wesentlichen parallel zur Mittelachse des Backrings, also projizierend in der vorliegenden Ansicht. Durch eine Bewegung des Laserkopfs 3 der Laseranordnung 2 durch die Bewegungsanordnung 10 kann der Laserkopf seitlich und/oder quer zur Bewegungsrichtung der Backoberfläche 1 bewegt werden. In der vorliegenden Konfiguration entspricht dies einer Bewegung entlang einer zur Rotationsachse des Backrings parallelen Achse.

Gemäß einer weiteren Ausführungsform weist die Laseranordnung eine optische Aufnahmeeinheit 13 auf. Die aufgenommenen Daten können von der Datenverarbeitungseinheit 14 ausgewertet werden und gemäß der Erfindung Parameter des Reinigungsprozesses beeinflussen. Dabei ist die Fortbewegung des Laserkopfs, die Laserintensität und/oder die Oszilationsfrequenz von der Form der Backoberfläche abhängig. Insbesondere bei Backplatten mit reliefartiger Struktur kann die Verschmutzung in Senken oder Nuten stärker sein als in geraden, flächigen Bereichen. Durch die optische Aufnahmeeinheit 13 werden derartige Formen der Backoberfläche 1 erkannt und durch geeignete Steuerung der Backmaschine und/oder der Laseranordnung gezielt gereinigt. Insbesondere ist die erfindungsgemäße Koppelung zur Steuerung der Backmaschinen und der Laseranordnung zur formabhängigen Reinigung der Backoberfläche geeignet. Auch bei Backoberflächen mit tiefen Einmuldungen kann es notwendig sein, den Fokus und die Richtung des Lasers je nach lokaler Form der Backoberfläche anzupassen. Insbesondere zur Bildung von hohlkörperförmigen Waffelkörpern wie beispielsweise Tüten oder Halbkugeln werden Backoberflächen mit verhältnismäßig tiefen Einbuchtungen eingesetzt. Auch zur Reinigung derartiger Backoberflächen ist die erfindungsgemäße Steuerung, die erfindungsgemäße Laseranordnung und die erfindungsgemäße Backmaschine sowie das erfindungsgemäße Verfahren geeignet. Ein weiterer Vorteil der formabhängigen Steuerung der Laseranordnung und der Backmaschine ist die Verbesserung der Effizienz des Reinigungsverfahrens. Backplatten zur Bildung von Waffelblättern beispielsweise weisen eine rasterförmige, reliefartige Struktur auf. Durch Synchronisation der Bewegung des Laserkopfes und/oder des Laserstrahls mit der Form der Backoberfläche kann die Effizienz der Reinigung weiter verbessert werden.

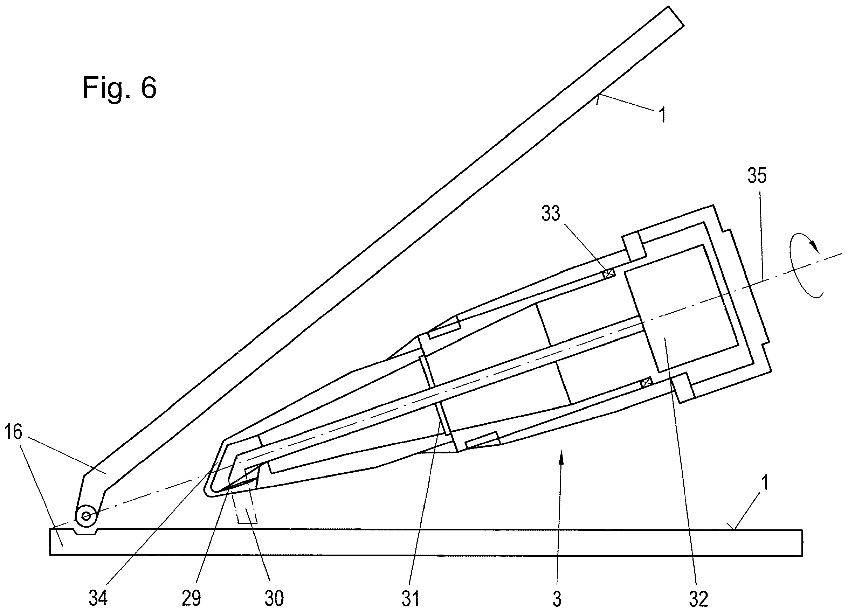

Fig. 6 zeigt eine Ausführungsform eines erfindungsgemäßen Laserkopfes der Laseranordnung 2. Die Anbindung des Laserkopfs 3 an weitere Bauteile der Laseranordnung 2 ist in dieser schematischen Darstellung nicht dargestellt. Gemäß einer Ausführungsform ist der dargestellte Laserkopf beispielsweise in einer ersten Linearachse angeordnet. Als weitere Ausführungsform können zwei Linearachsen und insbesondere eine zweite Linearachse 5 vorgesehen sein, um den Laserkopf 3 sowohl in Längs- als auch in Querrichtung der bewegten Backplatten bewegen zu können.

Die Backoberflächen 1 sind in der vorliegenden Ausführungsform an einer Backzange 16 vorgesehen. Diese Backzange 16 ist geöffnet. Insbesondere beträgt der Öffnungswinkel etwa jenem Öffnungswinkel, in dem auch der Teigaufguss bei normalem Betrieb erfolgt. Der Laserkopf 3 ist derart ausgebildet, dass eine Reinigung der Backoberflächen 1 der Backzangen in einer Stellung erfolgen kann, die dem Regelbetrieb entspricht. Dazu ist der Laserkopf konisch zulaufend ausgebildet und weist an seinem vorderen Ende eine Linse 29 auf, durch welche das Leselicht bzw. der Laserstrahl 30 austritt. Ferner umfasst der Laserkopf 3 eine Optikeinheit 31, eine Lasereinheit 32 sowie eine Lagerung 33.

Wie auch bei den vorangegangenen Ausführungsbeispielen ist es bei dem erfindungsgemäßen Laserkopf möglich, eine Fokussierung des Laserstrahls auf unterschiedliche Entfernungen zu bewirken. Insbesondere bei reliefartiger Struktur der Backoberfläche 1 kann es von Nöten sein, durch Veränderung der Brennweite das Reinigungsergebnis zu verbessern.

Insbesondere geschieht dies beispielsweise durch Verlagerung der Linse 29, durch die Optikeinheit 31 oder durch sonstige optische Komponenten, die dazu geeignet sind, den Fokus des Laserstrahls zu verändern.

In der vorliegenden Form ist der Austritt des Laserstrahls 30 darüber hinaus um eine Drehachse 35 drehbar. Insbesondere ist eine 360° Drehung des Laserstrahls möglich. Dadurch kann der Laserstrahl seitlich verschwenkt werden. Weiters kann der Laserstrahl beispielsweise von der unteren Backplatte auf die obere Backplatte gerichtet werden. Die Drehung des Laserstrahls 30 geschieht beispielsweise durch Drehung des Spiegels 34. Dieser ist am Austritt aus der Lasereinheit 32 zum Laserstrahl geneigt und lenkt den Laserstrahl 30 um. Insbesondere lenkt er den Laserstrahl 30 durch die Linse 29 auf die Backoberfläche 1. Durch Drehung des Spiegels kann der Raumwinkel der Umlenkung verändert werden. In der vorliegenden Ausführungsform weist die Laseranordnung 2 bzw. der Laserkopf 3 eine Lagerung 33 auf. Diese ermöglicht eine Verdrehung des Spiegels 34 gegenüber der Lasereinheit 32.

In vorteilhafter Weise ist gemäß dieser und weiterer Ausführungsformen die Laserordnung dadurch gekennzeichnet, dass der Fokus des Laserstrahls verändert werden kann und insbesondere dadurch, dass der Fokus je nach lokaler Form der Backoberfläche verändert werden kann.

Gemäß einer weiteren Ausführungsform kann die Laseranordnung darüber hinaus derart ausgebildet sein, dass der Laserstrahl um eine Drehachse schwenkbar und/oder drehbar ist. Die Drehachse verläuft gemäß einer bevorzugten Ausführungsform in einer Normalebene zur Transportrichtung oder Bewegungsrichtung der Backoberflächen 1. Beispielsweise kann bei einer Backzangenkette die Achse in der Normalebene der Bewegungsrichtung der Backzangen liegen und Richtung Gelenk der Verbindung der ersten und zweiten Backplatte weisen. Durch Drehung um die Achse kann dadurch der Laserstrahl auf die obere und/oder die untere Backoberfläche gerichtet werden.

In bevorzugter Weise ist die Drehbarkeit dadurch gekennzeichnet, dass sie 360° oder mehr beträgt.

Kombinationen der beschriebenen Ausführungsformen sind selbstverständlich möglich und entsprechen dem Erfindungsgedanken. Beispielsweise kann eine drehbare Laseranordnung an einer oder mehrerer Linearachsen vorgesehen sein, um die Anzahl der Freiheitsgrad zu erhöhen.

Ferner kann eine Veränderbarkeit des Fokus auch bei Laseranordnungen oder Laserköpfen mit drehbarem Laserstrahl vorgesehen sein.

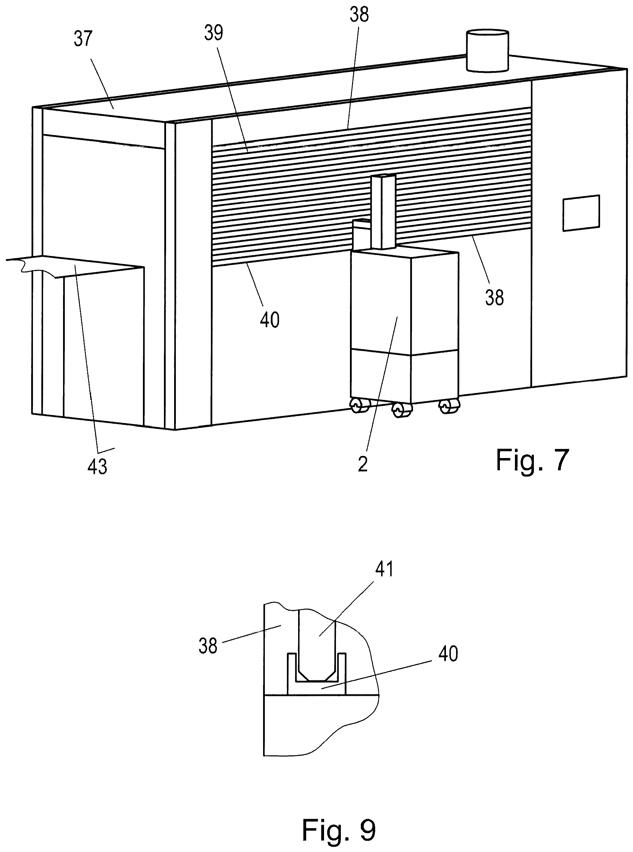

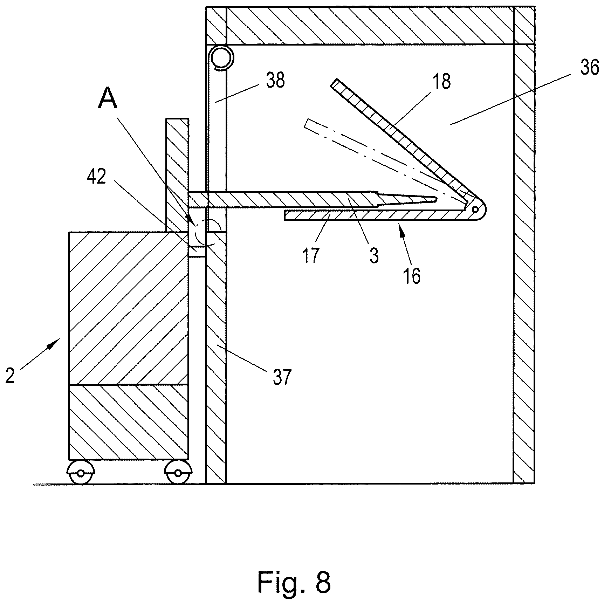

Die Fig. 7 zeigt die Ansicht eines Ofenvorderteiles (Ofenkopf der Backmaschine) mit angedockter Laseranordnung 2, ähnlich der Fig. 4. In diesem Abschnitt der Backmaschine befindet sich die vordere Umlenkung der Backplattenkette und es werden die Backzangen geöffnet, wie dies in der Schnittdarstellung in Fig. 8 erkennbar ist. Rechts vom Ofenkopf schließt sich - nicht dargestellt - der Ofenkörper mit üblicherweise niederer Bauhöhe als der Ofenkopf an. Am Ofenende befindet sich bekannterweise die hintere Umlenkung der Backplattenkette (nicht dargestellt). An der linken Seite ist der Ofenkopf teilweise offen und dort schließt ein schematisch angedeutetes Förderband 43 an, an das die fertig gebackenen Waffelblätter übergeben werden.

Zur Abschirmung etwaiger Strahlen und Vermeidung einer Gefährdung von Personen ist die Backmaschine dadurch gekennzeichnet, dass der Arbeitsbereich 36 der Laseranordnung 2 oder jedenfalls der Strahlenbereich des Laserkopfes 3 nach aussen abgeschirmt ist.

Zur Abschirmung dient gemäß den Figuren 7 bis 9 zum Einen das Maschinengehäuse 37, zum Anderen ist die Abschirmung dadurch gekennzeichnet, dass nach vorne hin zur Bedienungsöffnung 38 ein öffenbarer Verschluss 39 vorgesehen ist. Bevorzugt ist der Verschluss eine Klappe oder besonders bevorzugt eine Jalousie oder Rolladen mit der erforderlichen Abschirmwirkung, wie es in den Figuren 7 und 8 dargestellt ist.

Der untere Rand 40 der Bedienungsöffnung 38 weist in vorteilhafter Weise eine nach oben offene U-Schiene zur Aufnahme des unteren Randes 41 des Verschlusses 39 auf, um auch diesen sensiblen Bereich strahlungsdicht zu machen.

Die Fig. 8 zeigt mit dem Bezugszeichen 42 das Andockelement, um die Laseranordnung sowohl mechanisch als auch elektrisch-steuerungsmäßig mit der Backmaschine zu verbinden. Bevorzugt kann die Laseranordnung nur dann zur Abgabe der Laserstrahlen freigegeben werden, wenn ordnungsgemäß angedockt ist und der Verschluss geschlossen ist.

### Bezugszeichen

- 1.: Backoberfläche
- 2.: Laseranordnung
- 3.: Laserkopf
- 4.: erste Linearachse
- 5.: zweite Linearachse
- 6.: erste Rotationsachse
- 7.: erster Trägerteil
- 8.: zweiter Trägerteil
- 9.: Bearbeitungsbereich
- 10.: Bewegungsanordnung
- 11.: Einsatzbereich
- 12.: -
- 13.: optische Aufnahmeeinheit
- 14.: Datenverarbeitungseinheit
- 15.: Räder
- 16.: Backzange
- 17.: erste Backplatte
- 18.: zweite Backplatte
- 19.: Backbewegungsrichtung
- 20.: Umlenkrollen
- 21: .Backplatten-Steuerungseinrichtung
- 22.: erste Position
- 23.: zweite Position
- 24.: dritte Position
- 25.: Absaugung
- 26.: Abschirmung
- 27.: Backring
- 28.: vierte Position
- 29.: Linse
- 30.: Laserstrahl
- 31.: Optikeinheit
- 32.: Lasereinheit
- 33.: Lagerung
- 34.: Spiegel
- 35.: Drehachse
- 36.: Arbeitsbereich
- 37.: Maschinengehäuse
- 38.: Bedienungsöffnung
- 39.: Verschluss
- 40.: Rand der Bedienungsöffnung
- 41.: unterer Rand des Verschlusses
- 42.: Andockelement
- 43.: Förderband

## Patentansprüche

1. **Backmaschine,** umfassend eine Laseranordnung,
wobei die Laseranordnung (2) zur Reinigung einer oder mehrerer Backoberflächen (1) der Backmaschine geeignet ist,
wobei die Laseranordnung einen Laserkopf umfasst,
wobei die Laseranordnung als modulares, entfernbares Modul ausgeführt ist,
wobei eine Schnittstelle zur Verbindung mit der Backmaschine vorgesehen ist,
wobei die Laseranordnung mechanisch und steuertechnisch mit der Backmaschine gekoppelt ist,
und wobei die Backmaschine als Backzangenautomat ausgebildet ist,
**dadurch gekennzeichnet,**
- **dass** die Laseranordnung in einem Bereich des Backzangenautomaten vorgesehen ist, in dem die Backzangen unter einem Öffnungswinkel geöffnet sind, nämlich im Bereich des Vorkopfes, also im Bereich des Teigaufgusses,
- **und dass** die Laseranordnung dazu geeignet ist, Backzangen mit Öffnungswinkeln, welche etwa jenen Öffnungswinkeln entsprechen, in denen auch der Teigaufguss bei normalem Betrieb erfolgt, zu reinigen.

2. Backmaschine nach Anspruch 1, **dadurch gekennzeichnet, dass** die Schnittstelle eine mechanische Schnittstelle zur Koppelung der Laseranordnung mit der Backmaschine und eine Steuerungsschnittstelle zur Koppelung der Steuerung der Backmaschine mit der Steuerung der Laseranordnung umfasst.

3. Backmaschine nach Anspruch 1 oder 2, **dadurch gekennzeichnet, dass** eine Bewegungsvorrichtung zur Bewegung des Laserkopfes vorgesehen ist.

4. Backmaschine nach einem der Ansprüche 1 bis 3, **dadurch gekennzeichnet, dass** der Laserkopf entlang einer ersten Linearachse, einer zweiten Linearachse und/oder um eine erste Rotationsachse bewegbar ist, wobei die Achsen in vorbestimmter Ausrichtung zu der/den Backoberflächen stehen.

5. Backmaschine nach einem der Ansprüche 1 bis 4, **dadurch gekennzeichnet, dass** die Bewegungsvorrichtung(9)
ein erstes Trägerteil (7) zur Bewegung des Laserkopfs(3) entlang einer ersten Linearachse (4),
ein zweites Trägerteil (8) zur Bewegung des Laserkopfs(3) entlang einer zweiten Linearachse (5),
und/oder
eine erste Rotationsachse (6) zur Rotation oder zum Schwenken des Laserkopfs umfasst.

6. Backmaschine nach einem der Ansprüche 1 bis 5, **dadurch gekennzeichnet, dass** die Laseranordnung eine optische Aufnahmeeinheit und eine Datenverarbeitungseinheit zur Detektion der Verschmutzung und/oder der Reinigung der Backoberflächen aufweist.

7. Backmaschine nach einem der Ansprüche 1 bis 6, **dadurch gekennzeichnet, dass** der Laserkopf der Laseranordnung nach vorne in Richtung zur Backzangenachse zulaufend, bevorzugt konisch zulaufend ausgebildet ist und an seinem vorderen Ende eine Linse (29) für den Austritt des Laserstrahls (30) aufweist.

8. Backmaschine nach Anspruch 7, **dadurch gekennzeichnet, dass** der Laserkopf (3) derart ausgebildet ist, dass eine Reinigung der Backoberflächen (1) der Backzangen in einer Stellung erfolgen kann, die dem Regelbetrieb entspricht, wobei der Öffnungswinkel der Backzangen etwa jenem Öffnungswinkel entspricht, in dem auch der Teigaufguss bei normalem Betrieb erfolgt.

9. Backmaschine nach Anspruch 8, **dadurch gekennzeichnet, dass** der Laserkopf (3) um die Drehachse (35) drehbar, bevorzugt um wenigstens 360° drehbar, ausgebildet ist und dass zur Umlenkung des Laserstrahls ein im Laserkopf angeordneter Spiegel (34) angeordnet ist.

10. Backmaschine nach einem der Ansprüche 1 bis 9, **dadurch gekennzeichnet, dass** der Laserstrahl (30) der Laseranordnung entsprechend dem jeweiligen Abstand auf die Backoberfläche fokussierbar ist.

11. Backmaschine nach einem der Ansprüche 1 bis 10, **dadurch gekennzeichnet, dass** die Laseranordnung zur Reinigung der Backoberflächen im Reinigungsbereich im Bereich des Vorkopfes, also im Bereich des Teigaufgusses, vorgesehen ist,
dass beim Durchlauf dieses Bereichs die Backzangen geöffnet werden, um im Produktionsbetrieb den Teigaufguss vorzunehmen,
dass die Backmaschine darüber hinaus einen Reinigungsmodus aufweist, in dem kein Teigaufguss erfolgt,
und dass im Reinigungsmodus die Laseranordnung in der Nähe der Backplatten positioniert wird, um den Laserstrahl auf den gewünschten Bereich der Backoberfläche leiten zu können.

12. Backmaschine nach einem der Ansprüche 1 bis 11, **dadurch gekennzeichnet, dass** die Backmaschine zumindest eine Backzange mit einer ersten und einer zweiten Backplatte umfasst, dass an der ersten Backplatte eine erste Backoberfläche und an der zweiten Backplatte eine zweite Backoberfläche vorgesehen ist und dass zur Reinigung die erste Backoberfläche zur zweiten Backoberfläche einen Öffnungswinkel von 40° bis 120°, bevorzugt größer oder gleich etwa 90° aufweist, oder dass der Öffnungswinkel 40° bis 90° beträgt.

13. **Verfahren zur Reinigung** von Backoberflächen,
- wobei ein Laserkopf im Bereich der Backoberfläche einer Backmaschine nach einem der Ansprüche 1 bis 12 angeordnet wird,
- wobei ein Laserstrahl zur Reinigung der Backoberfläche auf die Backoberfläche geleitet wird,
- wobei durch Relativbewegung zwischen dem Laserkopf und der Backoberfläche der Bearbeitungsbereich der Laseranordnung über die Backoberfläche bewegt wird,
- wobei die Relativbewegung durch Bewegung der Backoberfläche und/oder durch Bewegung des Laserkopfes erzielt wird,
- und/oder wobei der Laserkopf und/oder der Bearbeitungsbereich quer zur Backbewegungsrichtung der Backoberfläche bewegt wird
**dadurch gekennzeichnet,**
- **dass** die Backmaschine als Backzangenautomat ausgebildet ist, dass im Bereich des Vorkopfs der Reinigungsbereich vorgesehen ist, in dem die Backzange und die Backoberflächen unter einem Öffnungswinkel geöffnet werden,
- wobei der Öffnungswinkel der Backzangen der Backmaschine etwa jenem Öffnungswinkel entspricht, in dem auch der Teigaufguss bei normalem Betrieb erfolgt,
- **dass** im Bereich der Backoberfläche der Laserkopf positioniert wird,
- **dass** der Laserkopf entlang der Backoberfläche der ersten Backplatte geführt wird bis die gesamte Oberfläche durch den Laserstrahl gereinigt ist.
- **dass** gegebenenfalls die zweite Backoberfläche der zweiten Backplatte mit dem Laserkopf gereinigt wird,
- **dass** die Backzange wieder geschlossen wird,
- **dass** die darauffolgende Backplatte an den Reinigungsbereich herangeführt wird und dass das Verfahren wiederholt wird.

14. Verfahren nach Anspruch 13, **dadurch gekennzeichnet, dass** die Laseranordnung mit der Backmaschine verbunden wird.

15. Verfahren nach Anspruch 13 oder 14, **dadurch gekennzeichnet, dass** zur Reinigung der zweiten Backplatte der Laserkopf um eine erste Rotationsachse geschwenkt wird.

16. Verfahren nach einem der Ansprüche 13 bis 15, **dadurch gekennzeichnet, dass** von einer optischen Aufnahmeeinheit Daten aufgenommen werden und zur Verarbeitung und/oder zur Beeinflussung des Reinigungsprozesses an eine Datenverarbeitungseinheit geleitet werden und gegebenenfalls gespeichert werden,
dass die Daten zur Detektion des Verschmutzungsgrades und der Verschmutzungsstellen der Backoberflächen eingesetzt werden,
dass die Daten mit Zuordnung zu einer Backplatten oder eines Bereichs der Backoberfläche gespeichert und einer Steuereinrichtung zur Steuerung des Laserkopfes hinsichtlich Laserleistung zugeführt werden.

17. Verfahren nach einem der Ansprüche 13 bis 16, **dadurch gekennzeichnet, dass** die Steuerung für den Laserkopf mit der Steuerung der Backvorrichtung verbunden ist.

18. Verfahren nach einem der Ansprüche 13 bis 17, **dadurch gekennzeichnet, dass** die Daten zur Steuerung von Parametern wie die Fortschrittsgeschwindigkeit, die Laserintensität, die Laserleistung, die Bearbeitungsbereichsgröße, die Oszillationsfrequenz und/oder die Oszillationsamplitude verwendet werden.

19. Verfahren nach einem der Ansprüche 13 bis 18, **dadurch gekennzeichnet, dass** die Daten zur Dokumentation von Parametern wie die Fortschrittsgeschwindigkeit, die Laserintensität, die Laserleistung, die Bearbeitungsbereichsgröße, die Oszillationsfrequenz und/oder die Oszillationsamplitude gespeichert werden.

## Claims

1. Baking machine comprising a laser arrangement,
wherein the laser arrangement (2) is adapted for cleaning one or more baking surfaces (1) of the baking machine,
wherein the laser arrangement comprises a laser head,
wherein the laser arrangement is designed as modular, removable module, wherein an interface is provided for a connection to the baking machine,
wherein the laser arrangement is mechanically and in terms of control coupled to the baking machine,
and wherein the baking machine is designed as an automatic baking tong machine,
**characterized**
- **in that** the laser arrangement is provided in an area of the automatic baking tong machine in which the baking tongs are opened at an opening angle, namely in the area of the pre-head, i.e. in the area of the batter application,
- and **in that** the laser arrangement is adapted for cleaning baking tongs with opening angles which correspond approximately to those opening angles at which also the batter is applied during normal operation.

2. Baking machine according to claim 1, **characterized in that** the interface comprises a mechanical interface for coupling the laser arrangement to the baking machine and a control interface for coupling the control of the baking machine to the control of the laser arrangement.

3. Baking machine according to claim 1 or 2, **characterized in that** a movement device for moving the laser head is provided.

4. Baking machine according to one of claims 1 to 3, **characterized in that** the laser head is movable along a first linear axis, a second linear axis and/or about a first axis of rotation, said axes being in predetermined alignment with the baking surface(s).

5. Baking machine according to one of claims 1 to 4, **characterized in that** the movement device (9) comprises a first support member (7) for moving the laser head (3) along a first linear axis (4),
a second support member (8) for moving the laser head (3) along a second linear axis (5),
and/or
a first axis of rotation (6) for rotating or pivoting the laser head.

6. Baking machine according to one of claims 1 to 5, **characterized in that** the laser arrangement comprises an optical recording unit and a data processing unit for detecting the contamination and/or the cleaning of the baking surfaces.

7. Baking machine according to one of claims 1 to 6, **characterized in that** the laser head of the laser arrangement is designed to taper forward towards the axis of the baking tongs, preferably conically, and has a lens (29) at its front end for the exit of the laser beam (30).

8. Baking machine according to claim 7, **characterized in that** the laser head (3) is designed in such a way that cleaning of the baking surfaces (1) of the baking tongs can be carried out in a position which corresponds to normal operation, the opening angle of the baking tongs corresponding approximately to the opening angle at which also the batter is applied during normal operation.

9. Baking machine according to claim 8, **characterized in that** the laser head (3) is designed to be rotatable about the axis of rotation (35), preferably rotatable by at least 360°, and **in that** a mirror (34) arranged in the laser head is provided for deflecting the laser beam.

10. Baking machine according to one of claims 1 to 9, **characterized in that** the laser beam (30) of the laser arrangement can be focused on the baking surface according to the respective distance.

11. Baking machine according to one of claims 1 to 10, **characterized in that** the laser arrangement is provided in the cleaning area in the area of the pre-head, i.e. in the area of the batter application, for cleaning the baking surfaces,
**in that** when passing through this area, the baking tongs are opened to allow the batter to be applied during production,
**in that** the baking machine also has a cleaning mode in which no batter is applied, and **in that** in the cleaning mode the laser arrangement is positioned near the baking plates to direct the laser beam onto the desired area of the baking surface.

12. Baking machine according to one of claims 1 to 11, **characterized in that** the baking machine comprises at least one baking tong with a first and a second baking plate, **in that** a first baking surface is provided on the first baking plate and a second baking surface is provided on the second baking plate, and **in that** for cleaning the first baking surface has an opening angle of 40° to 120°, preferably greater than or equal to about 90°, with respect to the second baking surface, or in that the opening angle is 40° to 90°.

13. Method for cleaning baking surfaces,
- wherein a laser head is arranged in the area of the baking surface of a baking machine according to one of claims 1 to 12,
- wherein a laser beam is directed onto the baking surface for cleaning the baking surface,
- wherein the processing area of the laser arrangement is moved over the baking surface by relative movement between the laser head and the baking surface,
- wherein the relative movement is achieved by movement of the baking surface and/or by movement of the laser head,
- and/or wherein the laser head and/or the processing area is moved transversely to the baking movement direction of the baking surface,
**characterized**
- **in that** the baking machine is designed as an automatic baking tong machine, that the cleaning area is provided in the area of the pre-head, in which the baking tongs and the baking surfaces are opened at an opening angle,
- wherein the opening angle of the baking tongs of the baking machine corresponds approximately to the opening angle at which also the batter is applied during normal operation,
- **in that** the laser head is positioned in the area of the baking surface,
- **in that** the laser head is guided along the baking surface of the first baking plate until the entire surface is cleaned by the laser beam,
- **in that** the second baking surface of the second baking plate is cleaned with the laser head, if necessary,
- **in that** the baking tongs are closed again,
- **in that** the successive baking plate is approached to the cleaning area and in that the method is repeated.

14. Method according to claim 13, **characterized in that** the laser arrangement is connected to the baking machine.

15. Method according to claim 13 or 14, **characterized in that** the laser head is pivoted about a first axis of rotation for cleaning the second baking plate.

16. Method according to one of claims 13 to 15, **characterized in that** data are recorded by an optical recording unit and are passed to a data processing unit for processing and/or for influencing the cleaning process and are stored, if necessary,
**in that** the data are used to detect the degree of contamination and the points of contamination of the baking surfaces,
**in that** the data are stored in association with a baking plate or an area of the baking surface and are fed to a control device for controlling the laser head with respect to laser power.

17. Method according to one of claims 13 to 16, **characterized in that** the control for the laser head is connected to the control of the baking device.

18. Method according to one of claims 13 to 17, **characterized in that** the data are used for controlling parameters such as the rate of progress, the laser intensity, the laser power, the size of the processing area, the oscillation frequency and/or the oscillation amplitude.

19. Method according to one of claims 13 to 18, **characterized in that** the data are stored for documentation of parameters such as the rate of progress, the laser intensity, the laser power, the size of the processing area, the oscillation frequency and/or the oscillation amplitude.

## Revendications

1. Machine de cuisson, comprenant un dispositif laser,
dans laquelle le dispositif laser (2) est adapté au nettoyage d'une ou de plusieurs surface(s) de cuisson (1) de la machine de cuisson,
dans laquelle le dispositif laser comprend une tête laser,
dans laquelle le dispositif laser est conçu comme un module modulaire amovible, dans laquelle une interface est prévue pour la connexion à la machine de cuisson,
dans laquelle le dispositif laser est couplé mécaniquement et en matière de contrôle à la machine de cuisson,
et dans laquelle la machine de cuisson est conçue comme une machine automatique à pinces de cuisson,
**caractérisée**
- **en ce que** le dispositif laser est prévu dans une zone de la machine automatique à pinces de cuisson où les pinces de cuisson sont ouvertes en formant un angle d'ouverture, à savoir au niveau de la tête avant, c'est-à-dire dans la zone de l'application de pâte,
- et **en ce que** le dispositif laser est adapté pour nettoyer des pinces de cuisson ayant des angles d'ouverture qui correspondent approximativement à ces angles d'ouverture de l'application de pâte en service normal.

2. Machine de cuisson selon la revendication 1, **caractérisée en ce que** l'interface comprend une interface mécanique pour coupler le dispositif laser à la machine de cuisson et une interface de commande pour coupler la commande de la machine de cuisson à la commande du dispositif laser.

3. Machine de cuisson selon la revendication 1 ou 2, **caractérisée en ce qu'**un dispositif de déplacement est prévu pour déplacer la tête laser.

4. Machine de cuisson selon l'une des revendications 1 à 3, **caractérisée en ce que** la tête laser peut se déplacer le long d'un premier axe linéaire, d'un deuxième axe linéaire et/ou autour d'un premier axe de rotation, lesdits axes étant en alignement prédéterminé avec la ou les surface(s) de cuisson.

5. Machine de cuisson selon l'une des revendications 1 à 4, **caractérisée en ce que** le dispositif de déplacement (9) comprend un premier élément de support (7) pour déplacer la tête laser (3) le long d'un premier axe linéaire (4),
un deuxième élément de support (8) pour déplacer la tête laser (3) le long d'un deuxième axe linéaire (5),
et/ou
un premier axe de rotation (6) pour faire tourner ou pivoter la tête laser.

6. Machine de cuisson selon l'une des revendications 1 à 5, **caractérisée en ce que** le dispositif laser comprend une unité d'enregistrement optique et une unité de traitement des données pour détecter la salissure et/ou le nettoyage des surfaces de cuisson.

7. Machine de cuisson selon l'une des revendications 1 à 6, **caractérisée en ce que** la tête laser du dispositif laser est conçue pour s'effiler vers l'avant dans la direction de l'axe de la pince de cuisson, de préférence de manière conique, et présente à son extrémité avant une lentille (29) pour la sortie du faisceau laser (30).

8. Machine de cuisson selon la revendication 7, **caractérisée en ce que** la tête laser (3) est conçue de telle manière que le nettoyage des surfaces de cuisson (1) des pinces de cuisson peut être effectué dans une position qui correspond au fonctionnement normal, l'angle d'ouverture de la pince de cuisson correspondant approximativement à l'angle d'ouverture de l'application de pâte en service normal.

9. Machine de cuisson selon la revendication 8, **caractérisée en ce que** la tête laser (3) est conçue pour pouvoir tourner autour de l'axe de rotation (35), de préférence d'au moins 360°, et **en ce qu'**un miroir (34) disposé dans la tête laser est prévu pour dévier le faisceau laser.

10. Machine de cuisson selon l'une des revendications 1 à 9, **caractérisée en ce que** le faisceau laser (30) du dispositif laser peut être focalisé sur la surface de cuisson en fonction de la distance respective.

11. Machine de cuisson selon l'une des revendications 1 à 10, **caractérisée en ce que** le dispositif laser est prévu dans la zone de nettoyage au niveau de la tête avant, c'est-à-dire dans la zone de l'application de pâte, pour le nettoyage des surfaces de cuisson,
**en ce que** lors du passage dans cette zone, les pinces de cuisson sont ouvertes pour permettre l'application de la pâte pendant la production,
**en ce que** la machine de cuisson dispose également d'un mode de nettoyage dans lequel aucune pâte n'est appliquée,
et **en ce qu'**en mode de nettoyage, le dispositif laser est placé près des plaques de cuisson pour pouvoir diriger le faisceau laser vers la zone souhaitée de la surface de cuisson.

12. Machine de cuisson selon l'une des revendications 1 à 11, **caractérisée en ce que** la machine de cuisson comprend au moins une pince de cuisson avec une première et une deuxième plaque de cuisson, **en ce qu'**une première surface de cuisson est prévue sur la première plaque de cuisson, et une deuxième surface de cuisson est prévue sur la deuxième plaque de cuisson, et **en ce que** pour le nettoyage, la première surface de cuisson présente un angle d'ouverture de 40° à 120°, de préférence supérieur ou égal à environ 90°, par rapport à la deuxième surface de cuisson, ou **en ce que** l'angle d'ouverture est de 40° à 90°.

13. Procédé de nettoyage des surfaces de cuisson,
- dans lequel une tête laser est disposée dans la zone de la surface de cuisson d'une machine de cuisson selon l'une des revendications 1 à 12,
- dans lequel un faisceau laser est dirigé sur la surface de cuisson pour nettoyer la surface de cuisson,
- dans lequel la zone de traitement du dispositif laser est déplacée sur la surface de cuisson par un mouvement relatif entre la tête laser et la surface de cuisson,
- dans lequel le mouvement relatif est obtenu par le mouvement de la surface de cuisson et/ou par le mouvement de la tête laser,
- et/ou dans lequel la tête laser et/ou la zone de traitement est déplacé transversalement à la direction de mouvement de cuisson de la surface de cuisson,
**caractérisé**
- **en ce que** la machine de cuisson est conçue comme une machine automatique à pinces de cuisson, en ce que dans la zone de la tête avant la zone de nettoyage est prévue, où la pince de cuisson et les surfaces de cuisson sont ouvertes en formant un angle d'ouverture,
- dans lequel l'angle d'ouverture des pinces à cuisson de la machine de cuisson correspond approximativement à l'angle d'ouverture de l'application de pâte en service normal,
- **en ce que** la tête laser est positionnée dans la zone de la surface de cuisson,
- **en ce que** la tête laser est dirigée le long de la surface de cuisson de la première plaque de cuisson jusqu'à ce que la surface entière est nettoyée par le faisceau laser,
- **en ce que** la deuxième surface de cuisson de la deuxième plaque de cuisson est nettoyée par la tête laser, le cas échéant,
- **en ce que** la pince de cuisson est refermée,
- **en ce que** la plaque de cuisson suivante est approchée de la zone de nettoyage et en ce que le procédé est répété.

14. Procédé selon la revendication 13, **caractérisé en ce que** le dispositif laser est relié à la machine de cuisson.

15. Procédé selon la revendication 13 ou 14, **caractérisé en ce que** la tête laser est pivotée autour d'un premier axe de rotation pour le nettoyage de la deuxième plaque de cuisson.

16. Méthode selon l'une des revendications 13 à 15, **caractérisé en ce que** les données sont enregistrées par une unité d'enregistrement optique et sont transmises à une unité de traitement des données pour le traitement et/ou pour influencer le processus de nettoyage et sont stockées si nécessaire,
**en ce que** les données sont utilisées pour détecter le degré de salissure et les points de salissure des surfaces de cuisson,
**en ce que** les données sont stockées avec affectation à une plaque de cuisson ou à une zone de la surface de cuisson et sont transmises à un dispositif de commande pour la commande de la tête laser en ce qui concerne la puissance du laser.

17. Procédé selon l'une des revendications 13 à 16, **caractérisé en ce que** la commande de la tête laser est reliée à la commande du dispositif de cuisson.

18. Procédé selon l'une des revendications 13 à 17, **caractérisé en ce que** les données sont utilisées pour contrôler des paramètres tels que la vitesse de progression, l'intensité du laser, la puissance du laser, la grandeur de la zone de traitement, la fréquence d'oscillation et/ou l'amplitude d'oscillation.

19. Procédé selon l'une des revendications 13 à 18, **caractérisé en ce que** les données sont stockées pour la documentation de paramètres tels que la vitesse de progression, l'intensité du laser, la puissance du laser, la grandeur de la zone de traitement, la fréquence d'oscillation et/ou l'amplitude d'oscillation.
